# EUROPEAN PATENT SPECIFICATION

(11) **EP 3 700 189 B1**
(45) Date of publication and mention of the grant of the patent: **01.02.2023**
(21) Application number: 19158422.6
(22) Date of filing: 21.02.2019
(51) Int. Cl.: H04N 5/232, G06F 3/01, G06F 3/03, G06K 9/00, G06T 7/70, G06T 7/10, G06F 1/16, G06T 7/12, G06T 7/73, G06V 20/20

(54) **MOBILE PHONE VERTICAL CAPTURE MODE**
VERTIKALER ERFASSUNGSMODUS EINES MOBILTELEFONS
MODE DE CAPTURE VERTICALE DE TÉLÉPHONE MOBILE

(43) Date of publication of application: 26.08.2020
(73) Proprietor: Vestel Elektronik Sanayi ve Ticaret A.S., 45030 Manisa (TR)
(72) Inventor: ÖZMEN, Ferhat, 45030 Manisa (TR); ÖZBAY, Mustafa Caner, 45030 Manisa (TR); AKGÜL, Burak Nazif, 45030 Manisa (TR)
(74) Representative: Kehl, Ascherl, Liebhoff & Ettmayr Patentanwälte Partnerschaft mbB

(56) References cited:
- EP-A1- 2 753 064
- US-A1- 2006 210 192
- US-A1- 2014 327 940
- US-A1- 2015 254 858
- US-A1- 2016 212 342
- US-A1- 2016 227 109
- US-A1- 2017 034 431
- US-A1- 2017 365 135
- US-A1- 2019 052 801

## Description

### TECHNICAL FIELD

The invention relates to mobile device for automatically capturing an image of an object and a method for automatically capturing an image of an object, when the camera of the mobile device is not held at eye level.

### BACKGROUND

Although applicable to any device comprising a digital camera, the present invention will mainly be described in conjunction with a mobile device comprising a digital camera.

When taking a picture with a mobile device of a large object on the ground it is often required to position the smartphone at an enlarged distance from the objection because mobile devices usually do not have means like fish-eye optics allowing them to take a picture of the complete object from a short distance. Thus, it is required to position the mobile device at an elevated position above the head of the user where the user can no longer see the display showing a preview of the picture to be taken. As a result, the user before triggering the shooting of an image cannot control whether the mobile device is positioned in a way that the entire object is captured by the camera.

Accordingly, there is a need for an improved mode to be executed on a mobile device.

US 2014/327940 describes systems and methods for detecting and classifying objects in video captured using mobile devices. The method includes invoking an image capture interface via a mobile device; and analyzing video data captured via the capture interface. The analysis includes determining whether an object exhibiting one or more defining characteristics is depicted within the viewfinder; and if so, whether that object satisfies one or more predetermined quality control criteria.

US 2019/052801 describes methods and apparatus to capture photographs using mobile devices. An example apparatus includes a photograph capturing controller to capture a photograph with a mobile device. The apparatus further includes a blurriness analyzer to determine a probability of blurriness of the photograph.

US 2016/212342 describes systems and methods for capturing images using a mobile device, which enable a user to use a mobile device to automatically capture a highresolution image of a rectangular object. The methods include capturing a low-resolution image of the rectangular object and detecting edges of the rectangular object in the low-resolution image, where the edges form a quadrangle.

US 2016/227109 describes systems and methods for imaging identification information. The methods include capturing information from a user interface regarding a particular type of credential document to be imaged, receiving a video stream of the user's credential document from a camera of the user device, displaying the video stream on a display of the user device, and determining whether a set of criteria for capturing the image of the user's credential document are satisfied.

US 2006/210192 describes automatic perspective distortion detection and correction for document imaging. A document template contains special markers that define the corners of the document. One of these markers, different from the others, uniquely identifies a particular corner. When an image of a document is captured and it is found to contain perspective distortion, the smallest rectangle that encloses the special markers in the captured image is calculated and geometric transforms are used to map the special markers in the captured image to the corners of the smallest rectangle.

### SUMMARY OF THE INVENTION

The above stated problem is solved by the features of the independent claims. It is understood, that independent claims of a claim category may be formed in analogy to the dependent claims of another claim category.

Accordingly, it is provided:
A mobile device for automatically capturing an image of an object comprising the features specified in claim 1.
Feature b) can comprise to perform corner detection, blob detection, edge detection or thresholding to determine a point of a boundary of the object.
Feature b) can comprise to display on the touchscreen an image of an object captured by the camera of the mobile device;
   receive at the mobile device by a user input the instruction to label a feature of the object indicating a point on the boundary of the object;
   determine a point of a boundary of the object.

The four indicators can also be configured to provide a haptic or acoustic signal.

The mobile device can comprise one of the four such indicators positioned at each of the four corners of the mobile device.

The mobile device can comprise one of the four such indicators positioned at each of the four edges between the corners of the mobile device.

The indicators can comprise vibrators.

The indicators can comprise lights.

The indicator can comprise a loudspeaker and the processor can be configured to output predefined messages by one or more speakers indicating the direction into which the device needs to be moved.

The processor can be further configured to indicate that the mobile device is ready to capture an image.

Further, it is provided:
A method for automatically capturing an image of an object on a mobile device comprising the steps specified in claim 10.
Step cb) can comprise to perform corner detection, blob detection, edge detection or thresholding to determine a determine a point of a boundary of the object.
Step cb) can comprise displaying on the touchscreen an image of an object captured by the camera of the mobile device;
   receiving at the mobile device by a user input the instruction to label a feature of the object indicating a point on the boundary of the object;
   determining a point of a boundary of the object.

The method can further comprise between step d) and step e) the step of determining that the captured image does not comprise all four points, indicating by an activated indicator providing a haptic, acoustic or optical signal that the mobile device needs to be moved into the direction of the activated indicator.

When the mobile device determines that the captured image comprises all four points the method can comprise indicating that the mobile device is ready to capture an image, capturing the image and storing the image in a memory of the device.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 illustrates a mobile device 100 of the present disclosure.
Fig. 2 illustrates the backside of a mobile device 100 of the present disclosure comprising indicators 106.
Fig. 3 illustrates an alternative back side of a mobile device 100 of the present disclosure comprising indicators 106.
Figs. 4 and 5 illustrate captured images of objects, which were not captured using the device 100 or the method of the present disclosure.
Figs. 6a, 7a, 8a, 9a illustrate captured images of an object, wherein each image only captured a part of the object.
Fig. 6b, 7b, 8b, 9b illustrate captured images of an object, wherein each image only captured a part of the object and containing labels indicating a point on a boundary of the object. The points have been obtained augmented reality algorithms.
Fig. 10 illustrates the image to be captured by the camera 102 when all points indicating the boundaries of the object are present in the image.
Fig. 11 illustrates the captured image of the object of Fig. 10.
Fig. 12 illustrates an image to be captured by the camera 102 when all points indicating the boundaries of the object are present in the image and which have been obtained by a user input.
Fig. 13 illustrates the captured image of the object of Fig. 12.
Fig. 14 illustrates a method according to the present disclosure.

In the figures like reference signs denote like elements unless stated otherwise.

### DETAILED DESCRIPTION OF THE DRAWINGS

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

Generally, this application is intended to cover any adaptations or variations of the specific embodiments discussed herein.

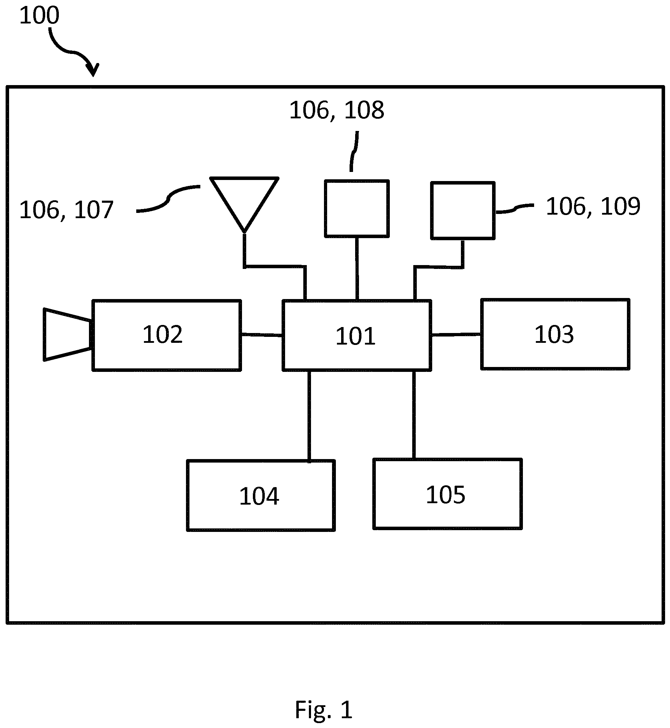

Disclosed is a mobile device 100 for capturing, in particular, automatically capturing an image. As illustrated in figure 1 the device 100 can comprise a camera 102, a memory 103, a gyroscope 105, a touchscreen 104, and at least one indicator 106 configured to provide an optical signal, and possibly also a haptic or acoustic signal. Each of the camera 102, memory 103, gyroscope 105, touchscreen 104, and the at least one indicator 106 configured to provide an optical signal, and possibly also a haptic or acoustic signal, is functionally linked to a processor 101 of the device 100. The mobile device 100 includes but is not limited to a smart phone, a touch screen communication device 100, a touch screen information processing system, a touch screen enabled portable communication device 100 and similar devices 100.

Preferably the device 100 contains at least one camera 102 on the back side of the mobile device 100, i.e. on the side of the mobile device 100 opposite to the front side comprising the touchscreen 104. The device 100 can also alternatively or in addition contain at least one camera 102 on the front side of the device 100. The back side can also comprise two or more cameras 102 and the front side may also comprise at least two or more cameras 102. The front side and the back side of the device 100 are connected by two opposing sides, the two lateral sides and the top and the bottom side, wherein the lateral sides are longer than the top and the bottom side. Each side is confined by four edges and an area extending between the edges. The meeting edges form corners.

Touchscreens 104 like those disclosed herein usually consist of two functional elements. The first functional element provides the actual optical display, e.g. liquid crystal display, LCD, or organic light-emitting diode, OLED, display. The second functional element provides elements for sensing a touch. The mobile device 100 also comprises a transmitter and/or receiver for transmitting/receiving radio waves (WIFI, Bluetooth, radio network like GSM, LTE or evolved LTE or any successors of these standards). The gyroscope 105 or any other sensor capable of determining a position of the device 100 in three-dimensional space is capable of determining the relative position of the mobile device 100 in three-dimensional space. In particular, the gyroscope 105 or any similar sensor is capable of determining whether the back side (or also alternatively the front side) of the device 100 is positioned parallel to the surface of the ground.

The at least one indicator 106 is configured to provide an optical signal, and possibly also a haptic or acoustic signal. An indicator 106 for providing a haptic signal can be a mechanical vibrator 107, i.e. a small electric motor connected to an off-center weight which are commonly used in mobile devices 100 to provide a vibrating alert. An indicator 106 for providing an acoustic signal can be a speaker 108, i.e. a loudspeaker. The indicator 106 for providing an optical signal can be a light 109, for example, a light emitting device 100, LED, light.

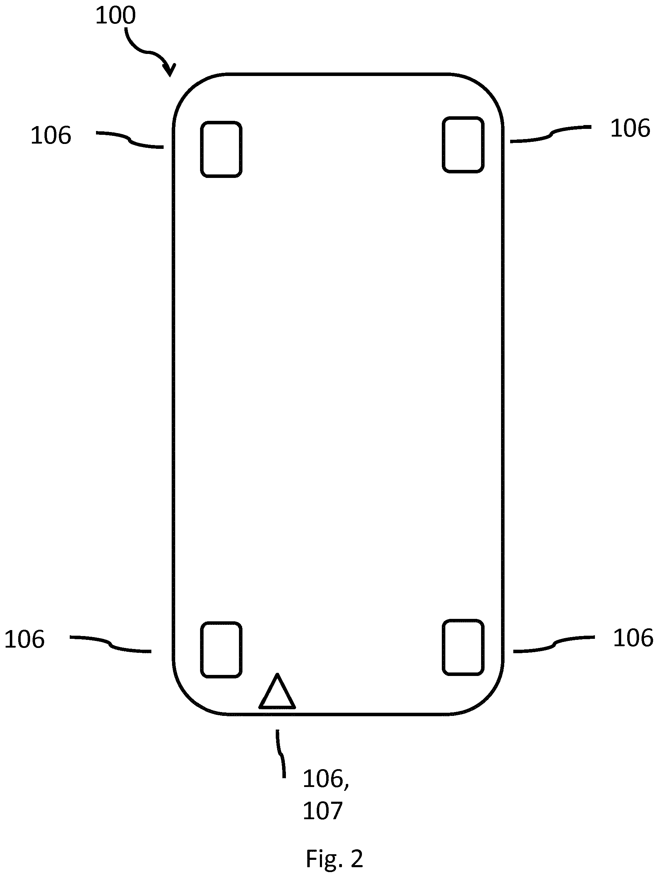

Figure 2 illustrates possible positions of the indicators 106 in the smartphone. The indicators 106 can be positioned in the corners of the device 100. The optical indicators 106, 109 are positioned so that they are visible on the surface of the device 100. In figure 2 (which is not an embodiment of the invention), the optical indicators 106, 109 are illustrated to be positioned exclusively on the back side or the front side of the smartphone. However, according to the invention, the optical indicators 106, 109 are positioned within the lateral sides and the top/bottom sides, i.e. are visible in the lateral sides and top/bottom side, and the front or back side of the smartphone (not illustrated). This has the advantage that the optical indicators 106 are visible to the user independent of how the device 100 is held by the user because the indicators 109 extend from the front side over the lateral sides and the top/bottom side to the back side. Thus, the optical indicators 109 are visible to the user independent thereof whether the front side or the back side faces the user.

The haptic indicators 106 may be placed in the same positions as the optical indicators 106 within the device 100, but do not need to be visible to the user.

In addition, a possible position of the speaker in the device 100 is illustrated in figure 2. The position of the speaker within the device 100 is not essential as long as the speaker is positioned in a way that the acoustic signal is hearable to the user. Alternatively, the acoustic indicators 106 may be placed in the same positions as the optical or haptic indicators 106. This can provide the advantage that an acoustic message from the device 100 is provided from a specific origin within the smartphone which can be used to forward directional information to the user.

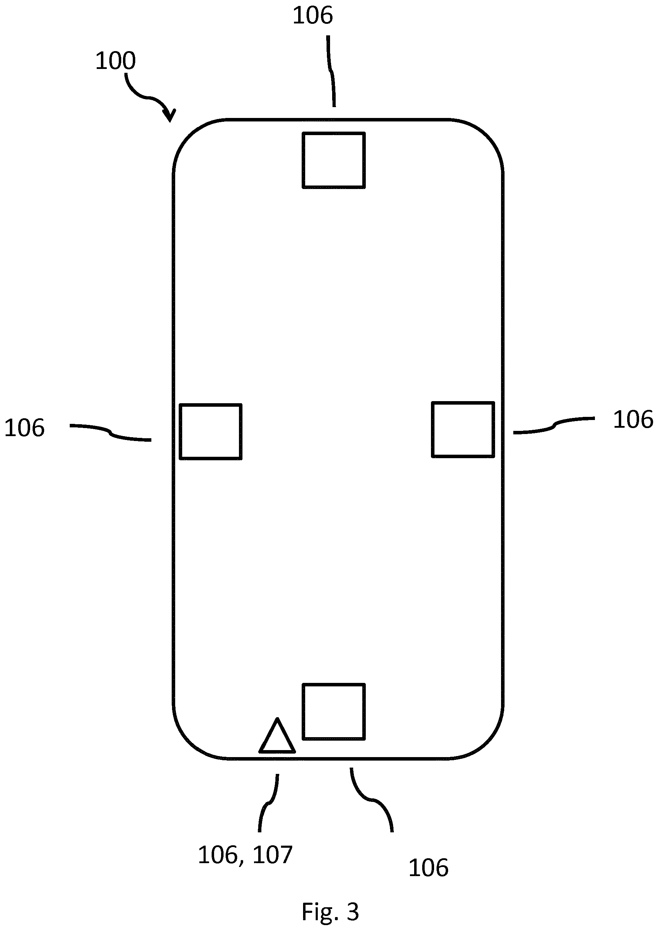

Figure 3 (which is not an embodiment of the invention) illustrates alternative possible positions of the indicators 106 on the back side or front side of the smartphone. The indicators 106 can be positioned in an area between the corners of the front or back side, preferably in the area close or at the center between two respective corners. To avoid repetition we refer to explanations provided in relation to figure 2 which apply analogously to indicators 106 positioned in an area between the corners of the device 100.

In the following it will be explained how the mobile device 100 can automatically capture an image.

Without the present disclosure a user may attempt to capture a large object by raising the mobile device to a certain distance or height from the large object. This distance or height may be above the eye level of the user and thus the user cannot see on the display (e.g. touchscreen) of the device whether the camera of the device has been positioned such that the device can capture the entire object.

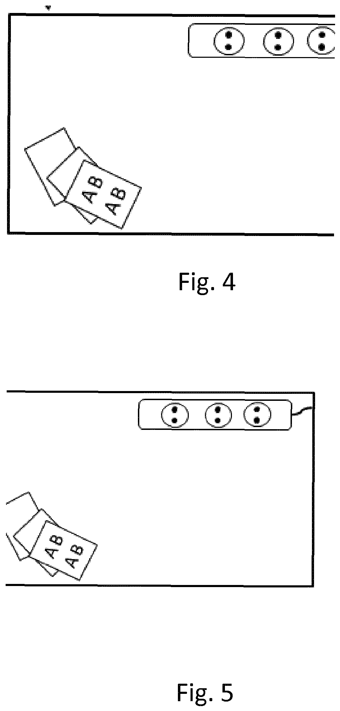

For example, figure 4 illustrates an image captured by the user wherein the captured image does not include the right side of a large object, in this case a table 200 captured from above which contains printed paper on the bottom left side and an incompletely captured power socket on the right top side of the table 200. When noticing the incomplete capturing the user may shift the position to the right side as illustrated in figure 5. Figure 5 illustrates an image captured by the user wherein the captured image does not include the left side of the table 200 of figure 4. The image now contains printed paper on the bottom left side only incompletely, but the power socket on the right top side of the table 200 is completely captured. The present disclosure avoids this outcome.

According to the present disclosure, the processor 101 is configured to receive by a user input an instruction to start a mode for automatically capturing an image of an object by a camera 102 of the mobile device 100. The user input can be a touching of the user of a particular icon or menu item on the mobile device 100. Alternatively, the mode may be started by a voice command. The mode is a specific software program capable of performing the method of the disclosure and being executed by the processor 101 of the mobile device 100.

In response to the input by the user the processor 101 is configured to start at the mobile device 100 the mode for automatically capturing an image. The processor 101 is further configured to determine the boundaries of the object.

To determine the boundaries of the object the processor 101 is configured to capture an image of the object in response to a user input and determine a first point of the boundary of the object. Preferably, the determined points are corners of an object, and the points define a boundary around (surrounding) the object. This step is repeated until the processor 101 has determined four points which indicate the boundaries of the object.

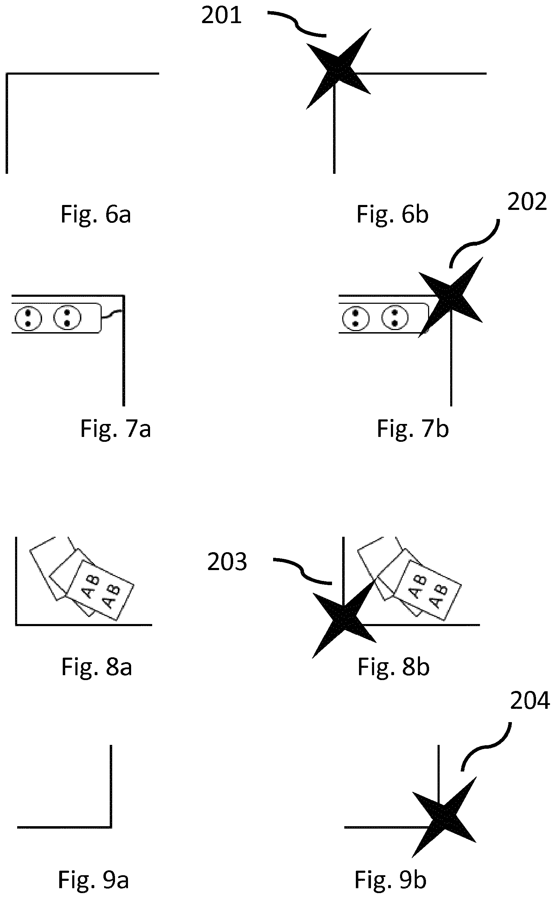

As illustrated in figure 6a, the processor 101 is configured to capture a first image of the object in response to a user input, i.e. a part of the object which is the upper left corner of the table 200 of figures 4 and 5 and as illustrated in figure 6b determines a first point of the boundary of the object, a corner of the object.

As illustrated in figure 7a, the processor 101 is configured to capture a second image of the object in response to a user input, i.e. a part of the object which is the upper right corner of the table 200 of figures 4 and 5 and as illustrated in figure 7b determines a second point of the boundary of the object, a corner of the object.

As illustrated in figure 8a, the processor 101 is configured to capture a third image of the object in response to a user input, i.e. a part of the object which is the lower left corner of the table 200 of figures 4 and 5 and as illustrated in figure 8b determines a third point of the boundary of the object, a corner of the object.

As illustrated in figure 9a, the processor 101 is configured to capture a fourth image of the object in response to a user input, i.e. a part of the object which is the lower right corner of the table 200 of figures 4 and 5 and as illustrated in figure 9b determines a first point of the boundary of the object, a corner of the object.

This step can be implemented by using known methods in the field of augmented reality. For example, interest points, fiducial markers in the captured image are detected by methods like corner detection, blob detection, edge detection or thresholding, and other image processing methods in a first stage. In a second stage a real-world coordinate system from the data obtained in the first stage is obtained. For example, some known methods assume objects with known geometry (or fiducial markers) are present in the scene.

If part of the scene is unknown simultaneous localization and mapping, SLAM, can map relative positions. If no information about scene geometry is available, structure from motion methods like bundle adjustment can be used. Mathematical methods which can be used in the second stage include projective (epipolar) geometry, geometric algebra, rotation representation with exponential map, kalman and particle filters, nonlinear optimization, robust statistics.

Accordingly, the processor 101 may map the determined points into the same absolute or relative coordinate system.

The processor 101 is further configured to determine by an input of the gyroscope 105 that the mobile device 100 is in a substantially horizontal or horizontal position and determine that at least one of the cameras 102 is facing downwards.

The processor 101 is further configured to determine that the captured image comprises all four points, capture an image, and store the image in a memory 103 of the device 100.

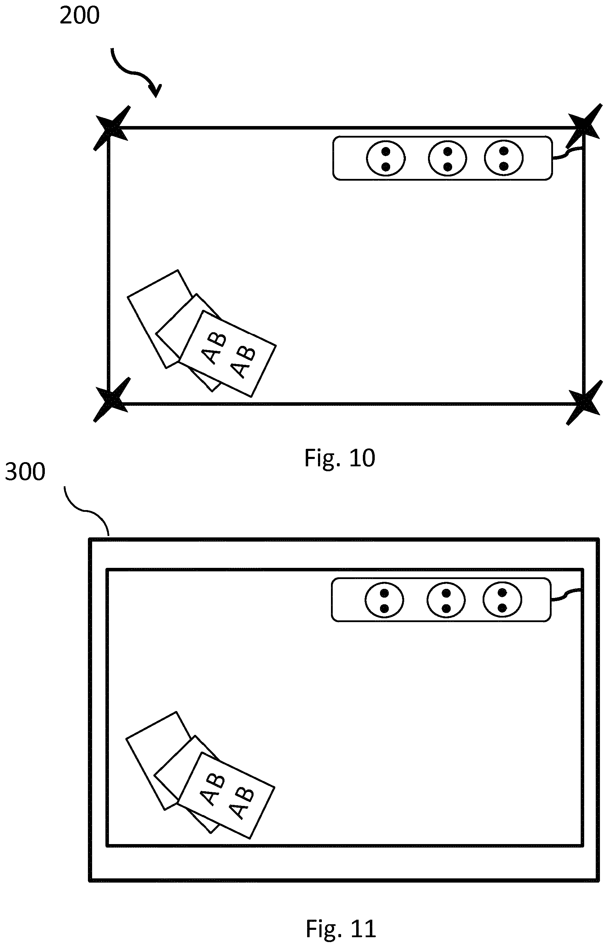

This configuration is illustrated in figures 10 and 11. In figure 10 the processor 101 first determines that all four points are now present in the image to be captured by the camera 102 (indicated by the star labels). Subsequently, the processor 101 captures the entire object as illustrated in figure 11.

In a further aspect, the configuration for determining the points in the boundaries of the object comprises that the processor 101 is configured to receive at the mobile device 100 by a user input the instruction to label a feature of the object indicating a point on the boundary of the object. The user input can be a touch of the user on the touchscreen 104 display indicating a specific feature of the object. This step is repeated until the processor 101 has determined four points which indicate the boundaries of the object. In this case, the processor 101 may be configured to project the position indicated by the user on the touchscreen 104 to a feature of the object using known techniques of augmented reality. This can be followed by the second stage providing a real-world coordinate system as explained above. This variation of the mode may be initiated by the user via the selection of a further menu item.

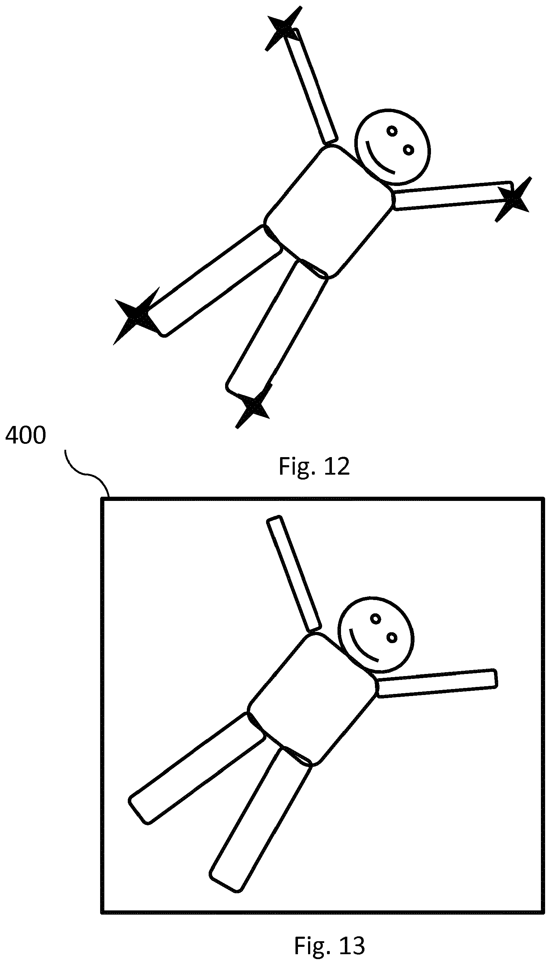

For example, figures 12 and 13 illustrate the capturing of an object that may have boundaries that may be difficult to identify by an augmented reality algorithm. Basically, the procedure is similar to the procedures illustrated in figures 6a to 9b, however, for conciseness the consecutive capturing of the four images has been omitted. Thus, figure 12 illustrates the object after the user has consecutively input four labels indicating the points identifying the boundary of the object (corresponding to figure 10). After the determination of the four points and determining that the captured image will comprise all four points, the processor 101 can capture an image of the entire object as illustrated in figure 13.

This aspect provides the advantage that even when the object does not have any boundaries clearly identifiable by the processor 101 or the processor 101 cannot perform this determination in a rapid manner by, for example, boundary detection the user can input the points of the boundaries directly.

The processor 101 can also be configured to output a particular signal indicating that the processor 101 is now ready to capture the image, e.g. an acoustic, haptic, or optical signal, and will capture the image within a preset time from the output of the signal. This has the advantage that the user can prepare for the capturing, e.g. by not moving the mobile device 100.

In a further aspect of the disclosure, the processor 101 is configured to determine that the captured image does not comprise all four points, indicate by an activated indicator 106 that the mobile device 100 needs to be moved into the direction indicated the activated indicator 106. This feature had the advantage that the user is informed by the device whether the device needs to be further moved to capture the object in its entirety.

For example, in the case of an acoustic indicator 108 the processor 101 can be configured to output particular directing messages like "left", "right", "closer", "less close" assisting the user in positioning the device 100 at the correct position with respect to the object. This has the advantage that the user does not need to look at the device 100 while positioning the device 100. The device 100 may also contain four different speakers at the corners or between the corners of a side of the device 100 which may provide additional spatial information for positioning the device 100.

In the case of optical or haptic indicators 107, 109 the activation or deactivation of these indicators 106 may indicate the direction into which the mobile device 100 needs to be moved. For example, activated indicators 107, 109 (permanently lighted flashing lights or vibrating vibrators) at one or more corners or between the corners of a side of the device 100 may indicate that the camera 102 is not yet in a position to capture the point of the boundary of the object which is next to the activated indicator 107, 109. For example, an indicator 109 lighted up or flashing on a right edge of the device 100 may indicate that the camera 102 is not yet in a position to capture a point on the right boundary of the object.

Alternatively, the indicators 106 remain activated with respect to the four points on the boundaries of the object when their respective points cannot yet be captured by the camera 102, and are deactivated as soon as their respective points can be captured by the camera 102.

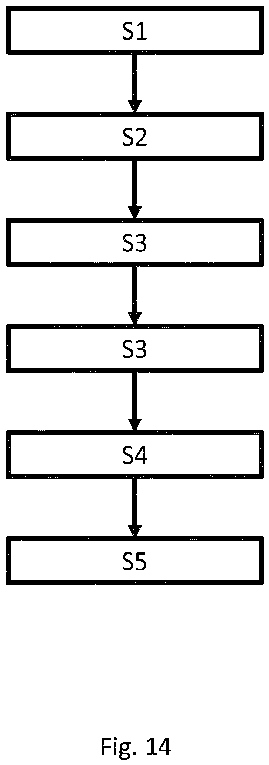

In a further aspect and as illustrated in figure 14, the following method for automatically capturing an image of an object on a mobile device 100 is disclosed comprising: receiving S1 at the mobile device 100 by a user input the instruction to start a mode for automatically capturing an image of an object by a camera 102 of the mobile device 100; starting S2 at the mobile device 100 the mode for automatically capturing an image; determining S3 by the mobile device 100 the boundaries of the object, the determining comprising: capturing, by the camera 102, an image of the object in response to a user input; determining a point of a boundary of the object; repeating said steps until four points defining the boundary are determined; determining S4 by the mobile device 100 that the mobile device 100 is in a substantially horizontal position and the to a user input; determining a point of a boundary of the object; repeating said steps until four points defining the boundary are determined; determining S4 by the mobile device 100 that the mobile device 100 is in a substantially horizontal position and the camera 102 is facing downwards; if so, determining that the captured image does not comprise all four, and indicating by activating at least one of four indicators 106 positioned within the lateral sides and the top/bottom sides of the mobile device, extending from the front side over the lateral sides and the top/bottom side to the back side of the mobile device and providing an optical signal that the mobile device 100 needs to be moved into the direction of the activated indicator or indicators 106; when the mobile device 100 determines that the captured image comprises all four points capturing S5 an image and storing the image in a memory 103 of the device 100.

The method is preferentially performed using the mobile device 100 described above. The method may comprise performing corner detection, blob detection, edge detection or thresholding to determine a determine a point of a boundary of the object.

The method may comprise displaying on the touchscreen 104 an image of an object captured by the camera 102 of the mobile device 100; receiving at the mobile device 100 by a user input the instruction to label a feature of the object indicating a point on the boundary of the object; determining a point of a boundary of the object.

The method may comprise, when the mobile device 100 determines that the captured image comprises all four points, indicating that the mobile device 100 is ready to capture an image, capturing an image and storing the image in a memory 103 of the device 100.

The method may comprise that one of the four indicators 106 is positioned at each of the four corners of the mobile device 100.

The method may comprise that one of the four indicators 106 is positioned at each of the four sides of the mobile device 100.

The method may comprise that the indicators 106 comprise vibrators and the activated indicator 106 is a vibrating vibrator and a deactivated vibrator is a non-vibrating vibrator.

The method may comprise that the indicators 106 comprise lights and the activated indicator 106 is a permanently powered light or a flashing light and deactivated indicator 106 is an unpowered light.

The method may comprise that the step of indicating by an activated indicator 106 is performed by indicating by predefined messages output by one or more speakers comprised in the mobile device 100.

The method may comprise that indicating by the mobile that the mobile device 100 is ready to capture an image comprises: deactivating the indicators 106 and indicating by a predefined message output by one or more speakers comprised in the mobile device 100 outputting that the device 100 is ready to capture an image.

Provided is a mobile device 100 for automatically capturing an image of an object and a method for automatically capturing an image of an object, when the camera 102 of the mobile device 100 is not held at eye level.

### List of reference signs

- 100: Mobile device
- 101: Processor
- 102: Camera
- 103: Memory
- 104: Touchscreen
- 105: Gyroscope
- 106: Indicator
- 107: Haptic indicator
- 108: Acoustic indicator
- 109: Optical indicator
- 200: Table
- 201: Point on boundary of object, upper left corner
- 202: Point on boundary of object, upper right corner
- 203: Point on boundary of object, lower left corner
- 204: Point on boundary of object, lower right corner
- 300: Captioned image of table
- 400: Captioned image of person
- S1-S6: Method steps

## Claims

1. Mobile device (100) for automatically capturing an image of an object comprising:
a camera (102);
a processor (101);
a memory (103);
a gyroscope (105);
a touchscreen (104);
wherein the processor (101) is configured to
- receive by a user input an instruction to start a mode for automatically capturing an image of an object by the camera (102) of the mobile device (100);
- to start at the mobile device (100) the mode for automatically capturing an image;
- determine the boundaries of the object by being configured to:
a) capture by the camera (102) an image of the object in response to a user input;
b) determine a point (201, 202, 203, 204) of a boundary of the object;
c) repeat steps a) to b) until four points (201, 202, 203, 204) defining the boundaries around the object are determined;
- determine by an input of the gyroscope (105) that the mobile device (100) is in a substantially horizontal position and determine that the camera (102) is facing downwards;
- if so, determine that the image to be captured comprises all four points (201, 202, 203, 204), capture the image, and store the image in the memory (103) of the device;
wherein the mobile device (100) further comprises four indicators (106) configured to provide an optical signal; the processor (101) is further configured to determine that the image to be captured does not comprise all four points (201, 202, 203, 204),
and to indicate by activating at least one of the indicators (106) that the mobile device (100) needs to be moved into the direction of the activated indicator or indicators (106);
**characterized in that**:
the four indicators (106) are positioned within the lateral sides and the top/bottom sides of the mobile device and extend from the front side over the lateral sides and the top/bottom side to the back side of the mobile device.

2. Mobile device (100) according to claim 1, wherein b) comprises to perform corner detection, blob detection, edge detection or thresholding to determine a point (201, 202, 203, 204) of a boundary of the object.

3. Mobile device (100) according to claim 1, wherein b) comprises
display on the touchscreen (104) the image of an object captured by the
camera (102) of the mobile device (100);
receive at the mobile device (100) by a user input an instruction to label a feature of the object indicating a point (201, 202, 203, 204) on the boundary of the object;
determine a point (201, 202, 203, 204) of a boundary of the object.

4. Mobile device (100) according to any of the preceding claims, wherein one of the indicators (106) is positioned at each of the four corners of the mobile device (100).

5. Mobile device (100) according to any of the preceding claims, wherein one of the indicators (106) is positioned at each of the four edges between the corners of the mobile device (100).

6. Mobile device (100) according to any of the preceding claims, where the indicators (106) further comprise vibrators (106, 107).

7. Mobile device (100) according to any of the preceding claims, wherein the indicators (106) comprise lights (106, 109).

8. Mobile device (100) according to any of the preceding claims, wherein the indicator (106) further comprises a loudspeaker (108) and the processor (101) is configured to output predefined messages by one or more speakers indicating the direction into which the device (100) needs to be moved.

9. Mobile device (100) according to any of the preceding claims, wherein the processor (101) is further configured to indicate that the mobile device (100) is ready to capture an image.

10. Method for automatically capturing an image of an object on a mobile device (100) comprising:
a) Receiving (S1) at the mobile device (100) by a user input an instruction to start a mode for automatically capturing an image of an object by a camera (102) of the mobile device (100);
b) Starting (S2) at the mobile device (100) the mode for automatically capturing an image;
c) Determining (S3) by the mobile device (100) the boundaries of the object, the determining comprising:
ca) capturing, by the camera (102), an image of the object in response to a user input;
cb) determining a point (201, 202, 203, 204) of a boundary of the object;
cc) repeat steps ca) to cb) until four points (201, 202, 203, 204) defining the boundaries around the object are determined;
d) Determining (S4) by the mobile device (100) that the mobile device (100) is in a substantially horizontal position and the camera (102) is facing downwards;
e) if so, determining that the image to be captured does not comprise all four points (201, 202, 203, 204), and indicating, by activating at least one of four indicators (106) positioned within the lateral sides and the top/bottom sides of the mobile device, extending from the front side over the lateral sides and the top/bottom side to the back side of the mobile device and providing an optical signal, that the mobile device (100) needs to be moved into the direction of the activated indicator or indicators (106);
f) when the mobile device (100) determines that the image to be captured comprises
all four points (201, 202, 203, 204) capturing (S5) the image and storing the
image in a memory (103) of the device.

11. Method according to claim 10, wherein step cb) comprises to perform corner detection, blob detection, edge detection or thresholding to determine a point (201, 202, 203, 204) of a boundary of the object.

12. Method according to claim 10, wherein step cb) comprises
displaying on the touchscreen (104) the image of the object captured by the camera (102) of the mobile device (100);
receiving at the mobile device (100) by a user input an instruction to label a feature of the object indicating a point (201, 202, 203, 204) on the boundary of the object;
determining a point (201, 202, 203, 204) on the boundary of the object.

13. Method according to any of claims 10-12, wherein when the mobile device (100) determines that the captured image comprises all four points (201, 202, 203, 204), indicating that the mobile device (100) is ready to capture an image, capturing the image and storing the image in a memory (103) of the device.

## Patentansprüche

1. Mobile Vorrichtung (100) zum automatischen Erfassen eines Bildes eines Objekts, umfassend:
eine Kamera (102);
einen Prozessor (101);
einen Speicher (103);
ein Gyroskop (105);
einen Berührungsbildschirm (104);
wobei der Prozessor (101) konfiguriert ist, um
- durch eine Benutzereingabe eine Anweisung zum Starten eines Modus zum automatischen Erfassen eines Bildes eines Objekts durch die Kamera (102) der mobilen Vorrichtung (100) zu empfangen;
- an der mobilen Vorrichtung (100) den Modus zum automatischen Erfassen eines Bildes zu starten;
- Bestimmen der Grenzen des Objekts, indem es konfiguriert ist, um:
a) Erfassen eines Bildes des Objekts durch die Kamera (102) in Reaktion auf eine Benutzereingabe;
b) Bestimmen eines Punktes (201, 202, 203, 204) einer Begrenzung des Objekts;
c) Wiederholen der Schritte a) bis b), bis vier Punkte (201, 202, 203, 204), die die Grenzen um das Objekt definieren, bestimmt sind;
- Bestimmen durch eine Eingabe des Gyroskops (105), dass sich die mobile Vorrichtung (100) in einer im Wesentlichen horizontalen Position befindet, und Bestimmen, dass die Kamera (102) nach unten gerichtet ist;
- wenn dies der Fall ist, bestimmen, dass das zu erfassende Bild alle vier Punkte (201, 202, 203, 204) aufweist, das Bild erfassen und das Bild in dem Speicher (103) des Geräts speichern;
wobei die mobile Vorrichtung (100) ferner vier Indikatoren (106) aufweist, die so konfiguriert sind, dass sie ein optisches Signal bereitstellen; der Prozessor (101) ferner so konfiguriert ist, dass er feststellt, dass das zu erfassende Bild nicht alle vier Punkte (201, 202, 203, 204) umfasst, und dass er durch Aktivieren mindestens eines der Indikatoren (106) anzeigt, dass die mobile Vorrichtung (100) in die Richtung des aktivierten Indikators oder der aktivierten Indikatoren (106) bewegt werden muss;
**dadurch gekennzeichnet, dass**:
die vier Indikatoren (106) innerhalb der seitlichen Seiten und der oberen/unteren Seiten der mobilen Vorrichtung angeordnet sind und sich von der Vorderseite über die seitlichen Seiten und die obere/untere Seite zur Rückseite der mobilen Vorrichtung erstrecken.

2. Mobile Vorrichtung (100) gemäß Anspruch 1, wobei b) eine Eckendetektion, eine Blobdetektion, eine Kantendetektion oder eine Schwellenwertbildung aufweist, um einen Punkt (201, 202, 203, 204) einer Begrenzung des Objekts zu bestimmen.

3. Mobile Vorrichtung (100) gemäß Anspruch 1, wobei b) aufweist
Anzeigen des von der Kamera (102) der mobilen Vorrichtung (100) aufgenommenen Bildes eines Objekts auf dem Touchscreen (104);
Empfangen einer Anweisung an der mobilen Vorrichtung (100) durch eine Benutzereingabe, ein Merkmal des Objekts zu kennzeichnen, das einen Punkt (201, 202, 203, 204) auf der Begrenzung des Objekts angibt;
Bestimmen eines Punktes (201, 202, 203, 204) einer Begrenzung des Objekts.

4. Mobile Vorrichtung (100) gemäß einem der vorhergehenden Ansprüche, wobei einer der Indikatoren (106) an jeder der vier Ecken der mobilen Vorrichtung (100) angeordnet ist.

5. Mobile Vorrichtung (100) gemäß einem der vorangehenden Ansprüche, wobei einer der Indikatoren (106) an jeder der vier Kanten zwischen den Ecken der mobilen Vorrichtung (100) positioniert ist.

6. Mobile Vorrichtung (100) gemäß einem der vorangehenden Ansprüche, wobei die Indikatoren (106) ferner Vibratoren (106, 107) aufweisen.

7. Mobile Vorrichtung (100) gemäß einem der vorangehenden Ansprüche, wobei die Indikatoren (106) Lichter (106, 109) aufweisen.

8. Mobile Vorrichtung (100) gemäß einem der vorangehenden Ansprüche, wobei der Indikator (106) ferner einen Lautsprecher (108) aufweist und der Prozessor (101) so konfiguriert ist, dass er vordefinierte Nachrichten über einen oder mehrere Lautsprecher ausgibt, die die Richtung angeben, in die die Vorrichtung (100) bewegt werden muss.

9. Mobile Vorrichtung (100) gemäß einem der vorhergehenden Ansprüche, wobei der Prozessor (101) ferner so konfiguriert ist, dass er anzeigt, dass die mobile Vorrichtung (100) bereit ist, ein Bild aufzunehmen.

10. Verfahren zum automatischen Erfassen eines Bildes eines Objekts auf einer mobilen Vorrichtung (100), aufweisend:
a) Empfangen (S1) an der mobilen Vorrichtung (100) durch eine Benutzereingabe einer Anweisung zum Starten eines Modus zum automatischen Erfassen eines Bildes eines Objekts durch eine Kamera (102) der mobilen Vorrichtung (100);
b) Starten (S2) an der mobilen Vorrichtung (100) des Modus zum automatischen Erfassen eines Bildes;
c) Bestimmen (S3) der Grenzen des Objekts durch die mobile Vorrichtung (100), wobei das Bestimmen Folgendes aufweist:
ca) Erfassen eines Bildes des Objekts durch die Kamera (102) in Reaktion auf eine Benutzereingabe;
cb) Bestimmen eines Punktes (201, 202, 203, 204) einer Begrenzung des Objekts;
cc) Wiederholen der Schritte ca) bis cb), bis vier Punkte (201, 202, 203, 204), die die Grenzen um das Objekt definieren, bestimmt sind;
d) Bestimmen (S4) durch die mobile Vorrichtung (100), dass sich die mobile Vorrichtung (100) in einer im Wesentlichen horizontalen Position befindet und die Kamera (102) nach unten gerichtet ist;
e) wenn dies der Fall ist, Bestimmen, dass das zu erfassende Bild nicht alle vier Punkte (201, 202, 203, 204) aufweist, und Anzeigen durch Aktivieren von mindestens einem von vier Indikatoren (106), die innerhalb der seitlichen Seiten und der oberen/unteren Seiten der mobilen Vorrichtung positioniert sind, die sich von der Vorderseite über die seitlichen Seiten und die obere/untere Seite zur Rückseite der mobilen Vorrichtung erstrecken und ein optisches Signal bereitstellen, dass die mobile Vorrichtung (100) in die Richtung des aktivierten Indikators oder der Indikatoren (106) bewegt werden muss;
f) wenn die mobile Vorrichtung (100) feststellt, dass das zu erfassende Bild alle vier Punkte (201, 202, 203, 204) aufweist, Erfassen (S5) des Bildes und Speichern des Bildes in einem Speicher (103) der Vorrichtung.

11. Verfahren gemäß Anspruch 10, wobei der Schritt cb) aufweist, dass eine Eckenentfernung, eine Blob-Erkennung, eine Kantenerkennung oder eine Schwellenwertbildung durchgeführt wird, um einen Punkt (201, 202, 203, 204) einer Grenze des Objekts zu bestimmen.

12. Verfahren gemäß Anspruch 10, wobei Schritt cb) folgendes aufweist
Anzeigen des von der Kamera (102) der mobilen Vorrichtung (100) aufgenommenen Bildes des Objekts auf dem Touchscreen (104);
Empfangen an der mobilen Vorrichtung (100) durch eine Benutzereingabe einer Anweisung zur Kennzeichnung eines Merkmals des Objekts, das einen Punkt (201, 202, 203, 204) auf der Grenze des Objekts angibt;
Bestimmen eines Punktes (201, 202, 203, 204) auf der Grenze des Objekts.

13. Verfahren gemäß einem der Ansprüche 10-12, wobei, wenn die mobile Vorrichtung (100) feststellt, dass das erfasste Bild alle vier Punkte (201, 202, 203, 204) aufweist, anzeigt, dass die mobile Vorrichtung (100) bereit ist, ein Bild zu erfassen, das Bild zu erfassen und das Bild in einem Speicher (103) der Vorrichtung zu speichern.

## Revendications

1. Dispositif mobile (100) pour capturer automatiquement une image d'un objet comprenant :
une caméra (102) ;
un processeur (101) ;
une mémoire (103) ;
un gyroscope (105) ;
un écran tactile (104) ;
dans lequel le processeur (101) est configuré pour
- recevoir par une entrée utilisateur une instruction pour démarrer un mode pour capturer automatiquement une image d'un objet par la caméra (102) du dispositif mobile (100) ;
- pour démarrer au niveau du dispositif mobile (100) le mode pour capturer automatiquement une image ;
- déterminer les limites de l'objet en étant configuré pour :
a) capturer par l'appareil photo (102) une image de l'objet en réponse à une entrée utilisateur ;
b) déterminer un point (201, 202, 203, 204) d'une limite de l'objet ;
c) répéter les étapes a) à b) jusqu'à ce que quatre points (201, 202, 203, 204) définissant les limites autour de l'objet soient déterminés ;
- déterminer par une entrée du gyroscope (105) que le dispositif mobile (100) est dans une position sensiblement horizontale et déterminer que la caméra (102) est tournée vers le bas ;
- si tel est le cas, déterminer que l'image à capturer comprend les quatre points (201, 202, 203, 204), capturer l'image, et stocker l'image dans la mémoire (103) du dé-viseur ;
dans lequel le dispositif mobile (100) comprend en outre quatre indicateurs (106) configurés pour fournir un signal optique ; le processeur (101) est en outre configuré pour déterminer que l'image à capturer ne comprend pas les quatre points (201, 202, 203, 204), et pour indiquer en activant au moins un des indicateurs (106) que le dispositif mobile (100) doit être déplacé dans la direction de l'indicateur ou des indicateurs (106) activés ;
**caractérisé en ce que**
les quatre indicateurs (106) sont positionnés à l'intérieur des côtés latéraux et des côtés supérieurs/inférieurs du dispositif mobile et s'étendent du côté avant sur les côtés latéraux et le côté supérieur/inférieur jusqu'au côté arrière du dispositif mobile.

2. Dispositif mobile (100) selon la revendication 1, dans lequel b) comprend l'exécution d'une détection de coin, d'une détection de goutte, d'une détection de bord ou d'un seuillage pour déterminer un point (201, 202, 203, 204) d'une limite de l'objet.

3. Dispositif mobile (100) selon la revendication 1, dans lequel b) comprend les étapes suivantes
afficher sur l'écran tactile (104) l'image d'un objet capturée par la caméra (102) du dispositif mobile (100) ;
recevoir au niveau du dispositif mobile (100) par une entrée utilisateur une instruction pour étiqueter une caractéristique de l'objet indiquant un point (201, 202, 203, 204) sur la limite de l'objet ;
déterminer un point (201, 202, 203, 204) d'une frontière de l'objet.

4. Dispositif mobile (100) selon l'une quelconque des revendications précédentes, dans lequel l'un des indicateurs (106) est positionné à chacun des quatre coins du dispositif mobile (100).

5. Dispositif mobile (100) selon l'une quelconque des revendications précédentes, dans lequel l'un des indicateurs (106) est positionné au niveau de chacun des quatre bords entre les coins du dispositif mobile (100).

6. Dispositif mobile (100) selon l'une quelconque des revendications précédentes, dans lequel les indicateurs (106) comprennent en outre des vibrateurs (106, 107).

7. Dispositif mobile (100) selon l'une quelconque des revendications précédentes, dans lequel les indi-cateurs (106) comprennent des lumières (106, 109).

8. Dispositif mobile (100) selon l'une quelconque des revendications précédentes, dans lequel l'indi-cateur (106) comprend en outre un haut-parleur (108) et le processeur (101) est configuré pour émettre des messages prédéfinis par un ou plusieurs haut-parleurs indiquant la direction dans laquelle le dispositif (100) doit être déplacé.

9. Dispositif mobile (100) selon l'une quelconque des revendications précédentes, dans lequel le pro-cesseur (101) est en outre configuré pour indiquer que le dispositif mobile (100) est prêt à capturer une image.

10. Méthode de capture automatique d'une image d'un objet sur un dispositif mobile (100) comprenant :
a) la réception (S1) au niveau du dispositif mobile (100) par une entrée utilisateur d'une instruction pour démarrer un mode de capture automatique d'une image d'un objet par une caméra (102) du dispositif mobile (100) ;
b) Démarrer (S2) au niveau du dispositif mobile (100) le mode pour capturer automatiquement une image ;
c) Déterminer (S3) par le dispositif mobile (100) les limites de l'objet, la détermination comprenant :
ca) capturer, par l'appareil photo (102), une image de l'objet en réponse à une entrée utilisateur ;
cb) déterminer un point (201, 202, 203, 204) d'une limite de l'objet ;
cc) répéter les étapes ca) à cb) jusqu'à ce que quatre points (201, 202, 203, 204) définissant les limites autour de l'objet soient déterminés ;
d) déterminer (S4) par le dispositif mobile (100) que le dispositif mobile (100) est dans une position sensiblement horizontale et que la caméra (102) est tournée vers le bas ;
e) si c'est le cas, déterminer que l'image à capturer ne comprend pas les quatre points (201, 202, 203, 204), et indiquer, en activant au moins un des quatre indicateurs (106) positionnés à l'intérieur des côtés latéraux et des côtés supérieurs/inférieurs du dispositif mobile, s'étendant du côté avant sur les côtés latéraux et le côté supérieur/inférieur jusqu'au côté arrière du dispositif mobile et fournissant un signal optique, que le dispositif mobile (100) doit être déplacé dans la direction du ou des indicateurs (106) activés ;
f) lorsque le dispositif mobile (100) détermine que l'image à capturer comprend les quatre points (201, 202, 203, 204), capturer (S5) l'image et stocker l'image dans une mémoire (103) du dispositif.

11. Méthode selon la revendication 10, dans laquelle l'étape cb) comprend la réalisation d'une dé-détection de coin, d'une détection de blob, d'une détection de bord ou d'un seuillage pour déterminer un point (201, 202, 203, 204) d'une limite de l'objet.

12. Méthode selon la revendication 10, dans laquelle l'étape cb) comprend les étapes suivantes
afficher sur l'écran tactile (104) l'image de l'objet capturée par la caméra (102) du dispositif mobile (100) ;
recevoir au niveau du dispositif mobile (100) par une entrée utilisateur une instruction pour étiqueter une caractéristique de l'objet indiquant un point (201, 202, 203, 204) sur la limite de l'objet ;
déterminer un point (201, 202, 203, 204) sur la limite de l'objet.

13. Méthode selon l'une quelconque des revendications 10-12, dans laquelle lorsque le dispositif mobile (100) détermine que l'image capturée comprend les quatre points (201, 202, 203, 204), indiquant que le dispositif mobile (100) est prêt à capturer une image, capturer l'image et stocker l'image dans une mémoire (103) du dispositif.
